# EUROPEAN PATENT SPECIFICATION

(11) **EP 2 022 361 B1**
(45) Date of publication and mention of the grant of the patent: **04.01.2012**
(21) Application number: 07122517.1
(22) Date of filing: 06.12.2007
(51) Int. Cl.: B29D 35/14

(54) **Toe cap for shoes**
Zehenkappe für Schuhe
Bout coqué pour chaussures

(30) Priority: 09.08.2007 IT VE20070030 U
(43) Date of publication of application: 11.02.2009
(73) Proprietor: Meccanica S.T.M. s.r.l., 31035 Crocetta del Montello (TV) (IT); Menegazzo, Corrado, 31040 Pederobba (TV) (IT)
(72) Inventor: Menegazzo, Corrado, 31040, Pederobba TV (IT)
(74) Representative: Modiano, Micaela Nadia

(56) References cited:
- WO-A-97/19609
- BE-A- 485 093
- DE-U1- 20 106 350
- US-A- 4 566 197

## Description

The present invention relates to a toe cap for shoes particularly of the safety type.

Currently, in order to protect the toes, particularly against crushing, safety shoes are used inside which, in the tip region, there is a toe cap made of rigid plastics, such as the material known by the trademark NYLON.

This known type of toe cap is constituted by a shell which is open at the rear and downward and has an open transverse cross-section which is generally approximately C-shaped so as to form an arc-like central portion, which during use lies above the toes of the user and from the ends of which there protrude, approximately at right angles, two arms which wrap laterally around the toes and extend until they affect, with their bottom, only partially the region that lies below the toes.

This known type of toe cap is inserted in the shoe and arranged so that its bottom is in contact with the sole, or, if the lower surface of the upper covers the sole completely, in contact with said lower surface, or, if provided, with an optional insole which is fixed above the sole or the lower surface of the upper.

An additional insole or supporting plantar insert for the foot of the user is usually arranged above the bottom of the toe cap.

However, these known types of toe cap have a drawback: they cannot be glued to the sole or upper or insole, since the material of which said toe caps are made, particularly if the material known by the trademark NYLON is used, does not lend itself to gluing.

This entails possible movements of the toe cap inside the shoe during its use, with the consequent discomfort that this can entail for the user.

The movement of the toe cap with respect to the shoe may also compromise optimum protection of the toes.

WO 97/19609 A discloses a protective toe cap for a safety boot, formed from a blank comprising a laminate of thermosetting resin which is shaped and hardened by a pressure moulding operation. The laminate comprises two layers of polyester or epoxy resin having a layer of fibre sandwiched therebetween, which layer of fibre may be glass fibre, carbon fibre, or metallic fibre. In another embodiment, a layer of metallic fibre is super-imposed on laminate on the inside of toe cap.

DE 201 06 350 U1 discloses a safety toe cap made of plastics, for industrial safety shoes, in which a softer plastic layer is moulded at the inside and/or outside of the toe cap.

The aim of the present invention is to solve the above mentioned problems, eliminating the drawbacks of the cited background art, by providing a toe cap which can be fixed in a nonremovable manner inside a shoe, so as to ensure adequate protection to the foot of the user.

Within this aim, an object of the invention is to provide a toe cap for shoes which ensures optimum comfort to the user.

Another object is to provide a toe cap for shoes which is structurally simple and has low manufacturing costs.

In accordance with the invention, there is provided a toe cap glued in a shoe as defined in the appended claims.

Further characteristics and advantages of the invention will become better apparent from the following detailed description of a particular but not exclusive embodiment thereof, illustrated by way of non-limiting example in the accompanying drawings, wherein:

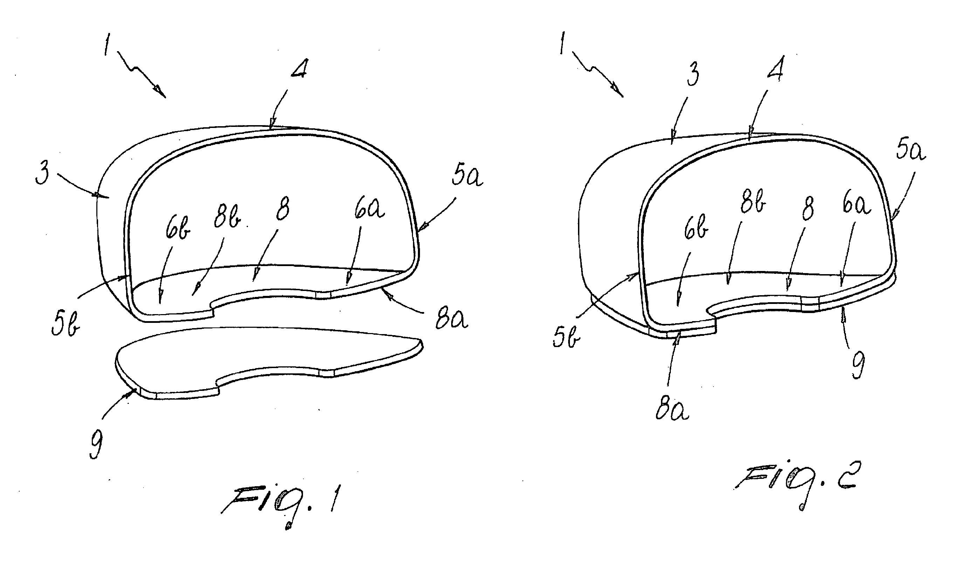

Figure 1 is an exploded perspective view of a toe cap according to the invention;
Figure 2 is a perspective view of the toe cap of the preceding figure;

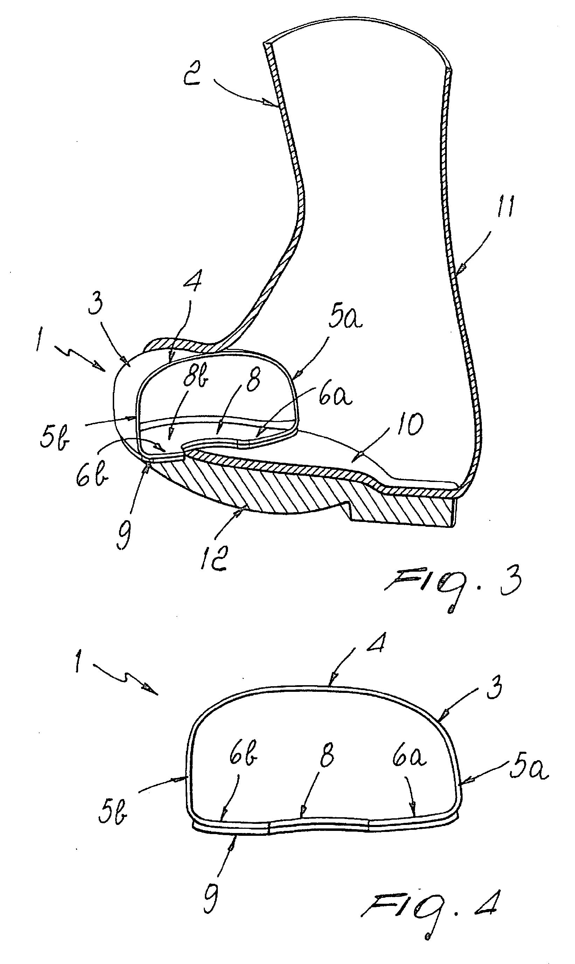

Figure 3 is a perspective view of a shoe to which a toe cap according to the invention is applied, said shoe being shown in cross-section along a longitudinal sectional plane;
Figure 4 is a rear view of the toe cap according to the invention;

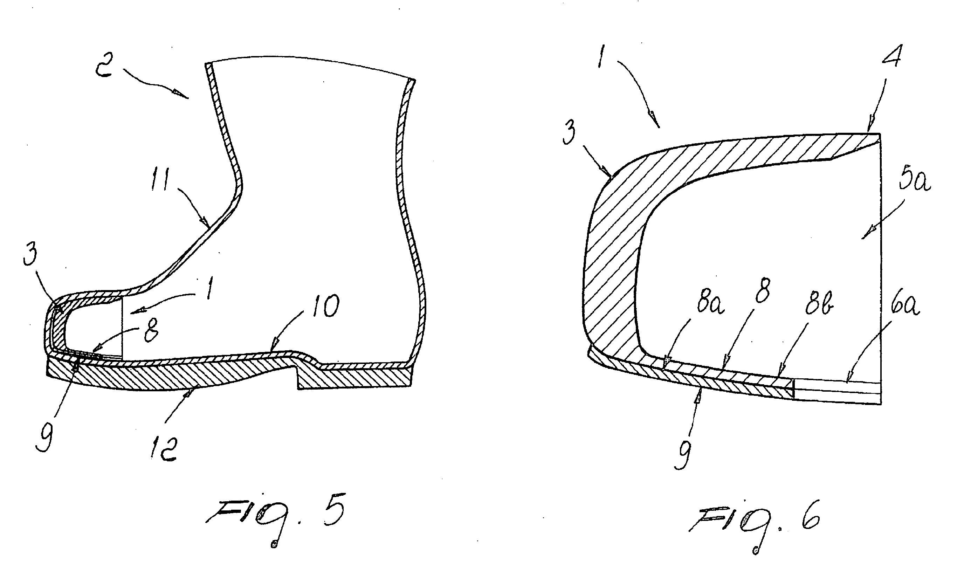

Figure 5 is a sectional view, taken along a longitudinal plane, of a shoe to which a toe cap according to the invention is applied;
Figure 6 is an enlarged-scale view of a detail of Figure 5.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a toe cap for shoes 2 which is constituted by a shell 3, made of rigid plastics, preferably of the type known by the trademark NYLON, and obtained by molding.

The shell 3 is open at the rear and preferably in a lower region; advantageously, it has an open transverse cross-section which is for example approximately C-shaped and in which there is a central arc-like portion 4, which during use lies above the toes of the user and from the ends of which there extend, approximately at right angles, two arms, designated by the reference numerals 5a and 5b, which wrap laterally around the toes, extending until they affect partially the region that lies below said toes with their free ends 6a, 6b, which are folded at right angles to the body of the arms 5a and 5b.

The free ends 6a and 6b of the two arms 5a and 5b affect the entire lower perimetric rim of the shell 3, blend with each other at the front end of the shell 3, and form as a whole the bottom 8 of the shell 3, which is partially open.

At least one first layer 9 of staple polyester fiber, is associated in a nonremovable manner with the outer surface 8a of the bottom 8.

The at least one first layer 9 is associated with the shell 3 during its molding, by arranging said at least one first layer 9 in an appropriate position within the mold, not shown in the accompanying figures, in which the shell 3 is molded.

In another constructive variation, not shown in the accompanying figures, one or more second layers of staple polyester fiber can be associated in a nonremovable manner with the inner upper surface 8b of the bottom 8 of the shell 3 during the step for molding said shell.

Once the toe cap 1 has been fixed to the shoe 2, it is possible for example to glue an insole, not shown in the accompanying figures and suitable to increase the wearing comfort for the user, onto one of said one or more second layers of material suitable for gluing.

Once it has thus been obtained, the toe cap 1 can be inserted in a shoe 2 and can be fixed thereto by gluing of the first layer 9 to the lower surface 10 of the upper 11, which in turn is fixed to the sole 12 of the shoe 2, for example by means of appropriately provided staples or screws, not shown in the accompanying figures, or by gluing.

As an alternative, if an insole, not shown in the accompanying figures, is fixed to the lower surface 10 of the upper 11, the first layer 9 of the toe cap 1 can be fixed by gluing to said insole.

In another embodiment, not shown in the accompanying figures, in which the upper 11 is fixed for example to the lateral surface of the sole 12, the first layer 9 can be glued directly to the upper surface of the sole 12 or to an optional insole, not shown in the accompanying figures, which in turn is fixed above said upper surface of the sole 12.

It has thus been found that the invention has achieved the intended aim and objects, a toe cap for shoes having been devised which, by way of the first layer of staple polyester fiber provided at the bottom of the shell, can be fixed stably and in a nonremovable manner to the shoe, without the risk of displacements which might compromise the comfort or safety of the user.

Further, the production costs of the toe cap according to the invention remain low, since the toe cap is obtained only by means of components which are easy to manufacture and/or assemble.

The toe cap according to the invention is of course susceptible of numerous modifications and variations, all of which are within the scope of the appended claims.

The dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A toe cap (1) insertable in a shoe (2), the toe cap (1) comprising a shell (3) made of rigid plastics which is obtained by molding and is open at the rear and provided with a partially open bottom (8), at least one first layer (9) of staple polyester fiber material being associated in a nonremovable manner on the outer surface (8a) of the bottom (8) of said shell (3) during the molding of said shell (3), said toe cap being insertable in said shoe (2) and said at least one first layer (9) being gluable to: a lower surface (10) of an upper (11) of said shoe (2); or an insole of said shoe; or a sole (12) of said shoe (2).

2. The toe cap (1) according to claim 1, **characterized in that** said at least one first layer (9) is associated with said shell (3) during its molding by arranging said at least one first layer (9), in the appropriate position, within the mold inside which said shell (3) is molded.

3. The toe cap (1) according to one or more of the preceding claims, **characterized in that** at least one second layer of staple polyester fiber material is associated in a nonremovable manner, during the molding of said shell (3), with the upper inner surface (8b) of said bottom (8) of said shell.

4. The toe cap (1) according to claim 3, **characterized in that** said at least one second layer is associated with said shell (3) during its molding by arranging said at least one second layer in an appropriate position within the mold inside which said shell (3) is molded.

5. The toe cap (1) according to claims 3 and 4, **characterized in that** above said at least one second layer, there is glued an insole which is suitable to increase the wearing comfort for the user.

## Patentansprüche

1. Zehenkappe (1), die in einen Schuh (2) einsetzbar ist, wobei die Zehenklappe (1) eine Schale (3) aus einem starren Kunststoff, die durch Gießen hergestellt wurde und an der Rückseite offen ist und mit einem teilweise offenen Boden (8) versehen ist, und wenigstens eine erste Schicht (9) aus einem Polyester-Stapelfasermaterial umfasst, die in einer nicht lösbaren Weise an der äußeren Oberfläche (8a) des Bodens (8) der Schale (3) während des Gießens der Schale (3) angeordnet wurde, wobei die Zehenkappe In den Schuh (2) einsetzbar ist und die wenigstens eine erste Schicht (9) an einer unteren Oberfläche (10) eines Obermaterials (11) des Schuhs (2) oder einer Einlegesohle des Schuhs oder einer Sohle (12) des Schuhs (2) anklebbar ist.

2. Zehenkappe (1) nach Anspruch 1, **dadurch gekennzeichnet, dass** die wenigstens eine erste Schicht (9) mit der Schale (3) während deren Gießers verbunden wird, indem die wenigstens eine erste Schicht (9) in einer geeigneten Position in der Gießform angeordnet wird, in der die Schale (3) gegossen wird.

3. Zehenkappe (1) nach einem oder mehreren der vorstehenden Ansprüche, **dadurch gekennzeichnet, dass** wenigstens eine zweite Schicht aus Polyester-Stapelfasermatorial in einer nicht lösbaren Weise während des Gießens der Schale (3) an der oberen inneren Oberfläche (8b) des Bodens (8) der Schale angeordnet wird.

4. Zehenkappe (1) nach Anspruch 3, **dadurch gekennzeichnet, dass** die wenigstens eine zweite Schicht mit der Schale (3) während deren Gießens verbunden wird, indem die wenigstens eine zweite Schicht in einer geeigneten Position Innerhalb der Gießform angeordnet wird, In der die Schale (3) gegossen wird.

5. Zehenkappe (1) nach Anspruch 3 und 4, **dadurch gekennzeichnet, dass** auf die wenigstens eine zweite Schicht eine Einlegesohle geklebt ist, die geeignet ist, den Tragekomfort für den Benutzer zu erhöhen.

## Revendications

1. Embout de sécurité (1) insérable dans une chaussure (2), l'embout de sécurité (1) comportant une coque (3) en matière plastique rigide réalisée par moulage, ouverte à l'arrière et pourvue d'un bas partiellement ouvert (8), au moins une première couche (9) de matière en fibres discontinues de polyester étant associée d'une manière non amovible sur la surface extérieure (8a) du bas (8) de ladite coque (3) pendant le moulage de ladite coque (3), ledit embout de sécurité étant insérable dans ladite chaussure (2) et ladite au moins une première couche (9) étant collable sur : une surface inférieure (10) d'une tige (11) de ladite chaussure (2) ; ou une première de ladite chaussure ; ou une semelle (12) de ladite chaussure (2).

2. Embout de sécurité (1) selon la revendication 1, **caractérisé en ce que** ladite au moins une première couche (9) est associée à ladite coque (3) pendant son moulage en plaçant ladite au moins une première couche (9), dans la position appropriée, dans le moule à l'intérieur duquel est moulée ladite coque (3).

3. Embout de sécurité (1) selon une ou plusieurs des revendications précédentes, **caractérisé en ce qu'**au moins une deuxième couche de matière en fibres discontinues de polyester est associée d'une manière non amovible, pendant le moulage de ladite coque (3), avec la surface supérieure intérieure (8b) dudit bas (8) de ladite coque.

4. Embout de sécurité (1) selon la revendication 3, **caractérisé en ce que** ladite au moins une deuxième couche est associée à ladite coque (3) pendant son moulage en plaçant ladite au moins une deuxième couche dans une position appropriée dans le moule à l'intérieur duquel est moulée ladite coque (3).

5. Embout de sécurité (1) selon les revendications 3 et 4, **caractérisé en ce que** par dessus ladite au moins une deuxième couche est collée une première qui convient pour améliorer le confort de port pour l'utilisateur.
